(19) Europäisches Patentamt
European Patent Office
Office européen des brevets

(11) **EP 2 535 743 B1**

(12) **EUROPÄISCHE PATENTSCHRIFT**

(45) Veröffentlichungstag und Bekanntmachung des Hinweises auf die Patenterteilung:
**07.11.2018 Patentblatt 2018/45**

(51) Int Cl.:
***G01V 8/22*** *(2006.01)*

(21) Anmeldenummer: **12169852.6**

(22) Anmeldetag: **29.05.2012**

(54) **Optischer sensor**

Optical sensor

Capteur optique

(84) Benannte Vertragsstaaten:
**DE**

(30) Priorität: **15.06.2011 DE 202011102825 U**

(43) Veröffentlichungstag der Anmeldung:
**19.12.2012 Patentblatt 2012/51**

(73) Patentinhaber: **Leuze electronic GmbH + Co KG**
**73277 Owen/Teck (DE)**

(72) Erfinder:
• **Argast, Martin**
  **88316 Isny (DE)**
• **Lohmann, Lutz**
  **82140 Olching (DE)**

• **Quapil, Gerald**
  **73277 Owen/Teck (DE)**
• **Tassy, Sven**
  **73230 Kirchheim/Teck (DE)**

(74) Vertreter: **Ruckh, Rainer Gerhard**
**Patentanwalt**
**Jurastrasse 1**
**73087 Bad Boll (DE)**

(56) Entgegenhaltungen:
**EP-A2- 1 752 795          DE-A1- 19 907 546**
**DE-A1-102004 038 257    DE-A1-102005 033 349**
**DE-B4- 10 229 408         DE-U1- 20 117 499**

EP 2 535 743 B1

**Beschreibung**

Die Erfindung betrifft einen optischen Sensor gemäß dem Oberbegriff des Anspruchs 1.

Ein derartiger optischer Sensor ist aus der DE 10 2005 033 349 A1 bekannt. Der dort beschriebene optische Sensor umfasst einen Sendelichtstrahlen emittierenden Sender, einen Empfangslichtstrahlen empfangenden Empfänger, eine Auswerteeinheit zur Generierung eines binären Schaltsignals, dessen Schaltzustände angeben, ob sich ein Objekt im Überwachungsbereich befindet oder nicht, und einen den Überwachungsbereich begrenzenden Reflektor. Dem Sender und dem Empfänger ist ein zweiter Sender oder Empfänger so zugeordnet, dass vom ersten Sender emittierte Sendelichtstrahlen bei freiem Strahlengang am Reflektor reflektiert und von dort als Empfangslichtstrahlen entlang eines ersten Empfangskanals vorwiegend zum ersten, in einer sendemahen Zone liegenden Empfänger geführt sind, und dass der zweite Sender oder Empfänger zum ersten Empfänger oder Sender zur Ausbildung eines auf einer senderfernen Zone führenden zweiten Empfangskanals zugeordnet ist. Bei einem Objekteingriff im Überwachungsbereich verlaufen die am Objekt reflektierten Empfangslichtstrahlen vorwiegend entlang dieses zweiten Empfangskanals. In der Auswerteeinheit zur Generierung des Schaltsignals wird das Verhältnis der Lichtmengen der in die beiden Empfangskanäle verlaufenden Empfangslichtstrahlen ausgewertet.

Durch die spezifische geometrische Strahlführung der Sendelichtstrahlen und Empfangslichtstrahlen in Form einer Aufteilung in unterschiedliche Empfangskanäle wird eine Unterscheidung von Objekteingriffen von einer Reflektordetektion bei freiem Strahlengang ermöglicht. Mit dem so ausgebildeten optischen Sensor können Objekte unterschiedlicher Materialbeschaffenheit, insbesondere auch spiegelnde Objekte oder Objekte mit depolarisierenden Eigenschaften, sicher erkannt werden, ohne dass hierzu der Einsatz von polarisiertem Licht nötig ist. Damit kann auf den Einsatz von Polarisationsfiltern verzichtet werden.

Die Optikelemente zur Strahlformung und Strahlablenkung der Sendelichtstrahlen und Empfangslichtstrahlen wie Sendeoptiken und Empfangsoptiken können weiterhin aus kostengünstig herstellbaren Kunststoffspritzteilen bestehen.

Nachteilig bei diesem optischen Sensor ist jedoch, dass Objekte mit hochglänzenden Oberflächen nicht in jedem Fall sicher erkannt werden können. Je nach Position derartiger Objekte im Überwachungsbereich und insbesondere abhängig von den Neigungen deren Objektoberflächen kann das Verhältnis der Signale der beiden Empfangskanäle dem Verhältnis der Signale beider Reflektordetektionen entsprechen, so dass bei Eindringen derartiger Objekte in den Überwachungsbereich ein freier Überwachungsbereich vorgetäuscht wird, das heißt es liegt eine Fehldetektion vor. Wechselt die Position oder Orientierung des Objekts im Überwachungsbereich, kann es zu einem fehlerhaften Wechseln der Schaltzustände des Schaltsignals kommen. Somit ist keine zuverlässige Objektdetektion gewährleistet.

Die DE 199 07 546 A1 betrifft eine optoelektronische Vorrichtung zur Erfassung von Objekten in einem Überwachungsbereich mit einem Sendelichtstrahlen emittierenden Sender, einem Empfangslichtstrahlen empfangenden Empfangselement und einer Auswerteeinheit, in welcher aus den am Ausgang des Empfangselements anstehenden Empfangssignalen mittels einer Schaltschwelle ein binäres Schaltsignal erzeugt wird. Der Sender und das Empfangselement sind koaxial in der Strahlachse der Sende- und Empfangslichtstrahlen liegend angeordnet, wobei im Strahlengang der Empfangslichtstrahlen strahlumlenkende Mittel vorgesehen sind, so dass der im Bereich der Strahlachse verlaufende zentrale Teil der Empfangslichtstrahlen an den strahlumlenkenden Mitteln abgelenkt wird und nicht auf das Empfangselement trifft.

Die DE 102 29 408 B4 betrifft einen optischen Sensor zur Erfassung von Objekten in einem Detektionsbereich mit wenigstens zwei durch ein Trennelement optisch getrennten Empfängern, welche jeweils von einer zeilenförmigen Anordnung von Empfangselementen gebildet sind, und welchen eine Empfangsoptik zur Fokussierung von Umgebungslicht aus dem Detektionsbereich auf die Empfangselemente vorgeordnet ist, und mit einer Auswerteeinheit, in welcher aus den Empfangssignalen an den Ausgängen der Empfänger ein Objektfeststellungssignal generiert wird, welches über einen Sensorausgang ausgebbar ist, wobei mittels eines Korrelationsverfahrens durch Bilden der Kreuzkorrelationsfunktion der Empfangssignalverläufe der Empfänger die Distanz eines Objektes zum optischen Sensor bestimmt wird.

Der Erfindung liegt die Aufgabe zugrunde, einen optischen Sensor der eingangs genannten Art bereitzustellen, welcher bei geringem konstruktivem Aufwand eine hohe Nachweissicherheit aufweist.

Zur Lösung dieser Aufgabe sind die Merkmale des Anspruchs 1 vorgesehen. Vorteilhafte Ausführungsformen und zweckmäßige Weiterbildungen der Erfindung sind in den Unteransprüchen beschrieben.

Die Erfindung betrifft einen optischen Sensor zur Erfassung von Objekten in einem Überwachungsbereich, mit wenigstens einem Sendelichtstrahlen emittierenden Sender, wenigstens einem sendernahen, Empfangslichtstrahlen empfangenden Empfänger und wenigstens einem senderfernen, Empfangslichtstrahlen empfangenden Empfänger, mit einem den Überwachungsbereich begrenzenden Reflektor, auf welchen die Sendelichtstrahlen bei freiem Überwachungsbereich geführt sind, und mit einer Auswerteeinheit, in welcher in Abhängigkeit von Empfangssignalen an den Ausgängen der Empfänger ein binäres Schaltsignal generiert wird. Dessen Schaltzustände geben an, ob sich ein Objekt im Überwachungsbereich befindet oder nicht. Die Empfänger bilden eine zum Sender koaxiale Anordnung. Die Empfänger bilden eine Empfängeranordnung, die auf einem Empfangselementeträger angeordnet ist. Der Sender ist in einem Sendetubus angeordnet, wobei der Sendetubus in eine zentrale Öffnung der Empfängeranordnung eingesetzt ist oder auf der Oberseite der Empfängeranordnung aufsitzt. Der senderferne Empfänger ist in mehrere Segmente unterteilt, welche jeweils separate Empfangssignale generieren. Eine winkelabhängige Objektdetektion erfolgt dadurch, dass die Verhältnisse der Empfangssignale der Segmente des senderfernen Empfängers ausgewertet werden, wobei durch Vergleich der Empfangssignale der Segmente des senderfernen Empfängers eine Unterscheidung eines Objekts mit einer glänzenden Oberfläche vom Reflektor erfolgt.

Ein wesentlicher Vorteil der Erfindung besteht darin, dass mit diesem Objekte beliebiger Oberflächenbeschaffenheit, insbesondere auch Objekte mit glänzenden Objektoberflächen, innerhalb des gesamten Überwachungsbereichs sicher und zuverlässig erkannt werden können.

Das Funktionsprinzip des optischen Sensors ist dabei derart, dass mit einfachen Auswerteregeln nicht nur das Verhältnis der Empfangssignale des sendernahen Empfängers und der Empfangssignale des senderfernen Empfängers, definiert durch die Summe der Empfangssignale der einzelnen Segmente, ausgewertet wird, sondern auch die Verhältnisse der Empfangssignale der einzelnen Segmente des senderfernen Empfängers.

Die Dimensionierungen des sendernahen und senderfernen Empfängers sind auf die Ausbildung und Position des Reflektors so abgestimmt, dass bei freiem Überwachungsbereich mehr Licht auf den sendernahen Empfänger als auf den senderfernen Empfänger trifft, wogegen bei einem diffus reflektierenden Objekt oder den meisten glänzenden Objekten im Überwachungsbereich mehr Licht auf den sendefernen Empfänger trifft. Damit wird bereits durch die Auswertung des Verhältnisses der Empfangssignale des sendernahen und des senderfernen Empfängers eine zuverlässige Objektdetektion erhalten.

Die Zuverlässigkeit der Objektdetektion wird erfindungsgemäß dadurch erhöht, dass auch die Verhältnisse der Empfangssignale der einzelnen Segmente des senderfernen Empfängers ausgewertet werden, wodurch eine winkelabhängige Objektdetektion ermöglicht wird. Diese gewährleistet eine sichere Objektdetektion von Objekten mit hochglänzenden Oberflächen, die je nach Orientierung der Oberflächen ähnliche oder gleiche Verhältnisse der Empfangssignale des senderfernen und sendernahen Empfänger wie bei einer Reflektordetektion bei freiem Überwachungsbereich generieren können. Da die Empfangslichtstrahlen von den glänzenden Objektoberflächen jedoch stets winkelabhängig in die Empfänger eingestrahlt werden, können diese von einer Reflektordetektion bei freiem Überwachungsbereich durch die Auswertung der Verhältnisse der Segmente des senderfernen Empfängers sicher unterschieden werden.

Alternativ oder zusätzlich kann auch der sendernahe Empfänger in gleicher Weise wie der senderferne Empfänger segmentiert sein, so dass auch mit diesem eine winkelabhängige Objektdetektion ermöglicht wird.

Der Aufbau des erfindungsgemäßen optischen Sensors kann generell dahingehend erweitert sein, dass dem Sender mehr als nur ein sendernaher und ein senderferner Empfänger zugeordnet sind. Generell können jeweils mehrere sendernahe und senderferne Empfänger vorgesehen sein. Weiterhin kann der optische Sensor auch eine Mehrfachanordnung von Sendern aufweisen, welchen jeweils sendernahe und senderferne Empfänger zugeordnet sind. Insbesondere kann der optische Sensor dabei einen Lichtvorhang ausbilden.

Prinzipiell kann die koaxiale Anordnung der Empfänger eine Polygonanordnung oder sonstige drehsymmetrische Anordnung bilden.

Besonders vorteilhaft bildet der oder jeder sendernahe Empfänger einen den Sender umschließenden Innenring. Der oder jeder senderferne Empfänger bildet einen den oder jeden Innenring umschließenden Außenring. Der oder jeder Außenring ist in Umfangsrichtung in mehrere Segmente unterteilt, die sich jeweils über einen bestimmten Winkelbereich des Außenrings erstrecken, wobei zweckmäßig alle Segmente des Außenrings gleich groß sind. Dasselbe gilt vorzugsweise auch für den oder jeden Innenring.

Zweckmäßig weist der senderferne Empfänger mindestens drei Segmente auf.

Durch den rotationssymmetrischen Aufbau der Empfänger kann der optische Sensor besonders vorteilhaft als Rundhülsensensor ausgebildet sein. Die Sensorkomponenten sind bevorzugt derart ausgebildet, dass der optische Sensor einen flachen Aufbau aufweist. Derartige optische Sensoren können besonders vorteilhaft für die Klarglaserkennung in Förderanlagen für einen mehrspurigen Flaschentransport eingesetzt werden.

Erfindungsgemäß bildet der senderferne und sendernahe Empfänger eine Baueinheit bildende Empfängeranordnung aus.

Die so gebildete Empfängeranordnung bildet eine kompakte Einheit, die fertigungstechnisch günstig im Sensorgehäuse des optischen Sensors, das mit Ausnahme des Reflektors alle Sensorkomponenten aufnimmt, integriert werden kann.

Gemäß einer Variante weist die Empfängeranordnung eine zentrale Öffnung auf. Der Sender liegt im Bereich der Öffnung der Empfängeranordnung. Die vom Sender emittierten Sendelichtstrahlen verlaufen zur Symmetrieachse der Öffnung und durchsetzen diese.

Der Sender kann so platzsparend und dicht an den Empfängern relativ zur Empfängeranordnung positioniert werden.

Erfindungsgemäß ist der Sender in einem Sendetubus, bestehend aus lichtundurchlässigem Material integriert, wodurch eine optische Trennung der Sendelichtstrahlen und Empfangslichtstrahlen erhalten wird.

Weiter ist zweckmäßig die Empfängeranordnung in einem Empfangstubus integriert, wodurch die Empfängeranordnung gegen schräg einfallendes Fremdlicht geschützt ist. Eine fertigungstechnisch günstige Variante sieht vor, dass der Empfangstubus mit dem Sendetubus beispielsweise über Stege verbunden ist und somit mit diesem eine Baueinheit bildet. Besonders vorteilhaft bilden der Sendetubus und der Empfangstubus auch mit dem Sensorgehäuse eine Baueinheit, wodurch der fertigungstechnische Aufwand zur Herstellung des optischen Sensors weiter reduziert werden kann.

Vorteilhaft ist der Empfangselementeträger von einer Glasplatte, einer Leiterplatte oder einer Folie gebildet.

Die so gebildete Einheit von Empfängeranordnung und Empfangselementeträger bildet eine kompakte Baueinheit, die kostengünstig herstellbar und einfach im Sensorgehäuse montierbar ist.

Alternativ oder zusätzlich sind der oder die Sender des optischen Sensors von organischen Leuchtdioden, sogenannten OLEDS gebildet. Alternativ oder zusätzlich ist die Auswerteeinheit in Form einer auf einen Träger aufgedruckten Auswerteelektronik gebildet.

Eine an die Ausbildung des Empfangselementeträgers gut angepasste Ausbildung der Empfängeranordnung sieht vor, dass die Empfänger aus organischen, fotoempfindlichen Schichten gebildet sind.

Insbesondere durch die dadurch erzielten großflächigen fotoempfindlichen Flächen der Empfänger kann bei dem erfindungsgemäßen optischen Sensor auf eine Empfangsoptik verzichtet werden, wodurch der konstruktive Aufwand des optischen Sensors weiter reduziert werden kann.

Damit weist der optische Sensor als einziges Optikelement eine Sendeoptik auf, die vorteilhaft in einer Frontscheibe des optischen Sensors integriert werden kann, das heißt einstückig mit dieser ausgebildet sein kann, was weiterhin zu einem geringen konstruktiven Aufwand des optischen Sensors führt. Schließlich können gemäß einer vorteilhaften Ausführungsform die Frontscheibe mit der Sendeoptik, der Empfangselementeträger sowie eine Leiterplatte durch den Empfangstubus in Sollpositionen positioniert sein.

Der Empfangstubus erfüllt somit eine Zusatzfunktion als Montagehilfe für eine relativ große Anzahl weiterer Sensorkomponenten.

Gemäß einer vorteilhaften Weiterbildung der Erfindung ist ein Zusatzsender zur Objektdetektion im Nahbereich vorgesehen.

Mit einem derartigen Zusatzsender können insbesondere auch Objekte mit glänzenden Oberflächen noch dicht vor dem optischen Sensor sicher erfasst werden.

Gemäß einer vorteilhaften Ausführungsform ist der optische Sensor als Sicherheitssensor ausgebildet, der zur Erkennung von Personen in einem Gefahrenbereich eingesetzt wird. Hierzu weist der optische Sensor einen fehlersicheren Aufbau, insbesondere Mittel zur fehlersicheren Signalauswertung, auf. Insbesondere kann eine redundant aufgebaute Auswerteeinheit, beispielsweise in Form zweier sich zyklisch überwachender Prozessoren, vorgesehen sein.

Die Erfindung wird im Folgenden anhand der Zeichnungen erläutert. Es zeigen:

Figur 1: Blockschaltbild einer Ausführungsform des erfindungsgemäßen optischen Sensors.

Figur 2a: Querschnittsdarstellung einer ersten Ausführungsform einer Sender- Empfängeranordnung des optischen Sensors Figur 1.

Figur 2b: Draufsicht auf die Anordnung gemäß Figur 2a.

Figur 3a: Querschnittsdarstellung einer nicht zur Erfindung gehörenden Sender- Empfängeranordnung des optischen Sensors gemäß Figur 1.

Figur 3b: Draufsicht auf die Anordnung gemäß Figur 3a.

Figur 4a: Querschnittsdarstellung einer dritten Ausführungsform einer Sender- Empfängeranordnung des optischen Sensors gemäß Figur 1.

Figur 4b: Draufsicht auf die Anordnung gemäß Figur 4a.

Figur 5a: Verlauf der Sendelichtstrahlen und Empfangslichtstrahlen für die Anordnung der Figuren 4a, 4b bei freiem Überwachungsbereich.

Figur 5b: Verlauf der Sendelichtstrahlen und Empfangslichtstrahlen für die Anordnung der Figuren 4a, 4b bei einer Objektdetektion.

Figur 6: Erweiterung der Anordnung der Figuren 4a, 4b mit einem Zusatzsender.

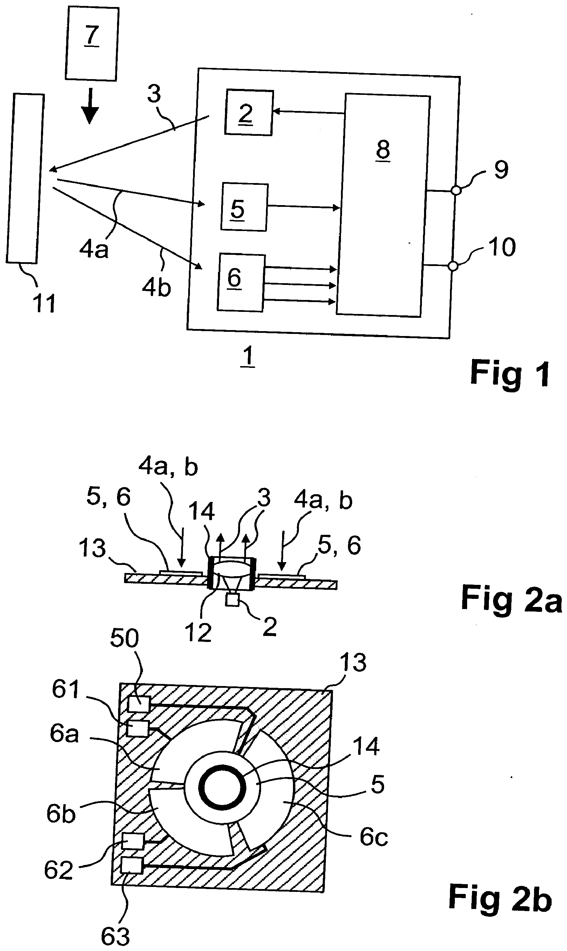

Figur 1 zeigt ein Blockschaltbild des erfindungsgemäßen optischen Sensors 1. Der optische Sensor 1 weist einen Sender 2 auf der Sendelichtstrahlen 3 emittiert. Zudem weist der optische Sensor 1 zwei Empfangslichtstrahlen 4a, 4b empfangende Empfänger 5, 6 auf. Diese Sensorkomponenten dienen zur Erfassung von Objekten 7 in einem Überwachungsbereich. Die Sensorkomponenten sind an eine Auswerteeinheit 8 in Form eines Mikroprozessors oder dergleichen angeschlossen. Die Auswerteeinheit 8 dient zur Steuerung des Senders 2 und zur Auswertung der Empfangssignale der Empfänger 5, 6. In Abhängigkeit der Empfangssignale der Empfänger 5, 6 wird in der Auswerteeinheit 8 ein binäres Schaltsignal generiert, dessen Schaltzustände angeben, ob sich ein Objekt 7 im Überwachungsbereich befindet oder nicht. Das Schaltsignal wird über einen Schaltausgang 9 ausgegeben. Eine serielle Schnittstelle 10 dient zum Parametrieren des optischen Sensors 1. Generell ist auch eine Parametrierung über den Schaltausgang 9 möglich. Die vorgenannten Sensorkomponenten sind in einem Sensorgehäuse 1a integriert. Als weitere, außerhalb des Sensorgehäuses 1a angeordnete Sensorkomponente ist ein Reflektor 11 vorgesehen, der im vorliegenden Fall als Tripelreflektor ausgebildet ist. Das Sensorgehäuse 1a und der Reflektor 11 sind an gegenüberliegenden Rändern des Überwachungsbereichs angeordnet. Bei freiem Überwachungsbereich gelangen die Sendelichtstrahlen 3 ungehindert zum Reflektor 11 und werden von diesem als Empfangslichtstrahlen 4a, 4b auf die Empfänger 5, 6 zurückreflektiert. Befindet sich ein Objekt 7 im Überwachungsbereich, werden die Sendelichtstrahlen 3 von diesem als Empfangslichtstrahlen 4a, 4b zurück reflektiert.

Die Figuren 2a, 2b zeigen eine erste Ausführungsform einer Sender- Empfängeranordnung für den optischen Sensor 1 gemäß Figur 1.

Dem Sender 2, der von einer Leuchtdiode oder dergleichen gebildet ist, ist eine Sendeoptik 12 zur Strahlformung der Sendelichtstrahlen 3 nachgeordnet. Die Empfänger 5, 6 bilden eine Empfängeranordnung, das heißt eine Baueinheit, die auf einem Empfangselementeträger 13 angeordnet ist. Der Empfangselementeträger 13 besteht aus einer Glasplatte oder einer Folie. Darauf sind die Empfänger 5, 6 in Form von organischen, fotoempfindlichen Schichten aufgebracht. Der Empfangselementeträger 13 und die Empfängeranordnung weisen eine zentrale Öffnung auf, in welche ein Sendetubus 14 eingesetzt ist, in dem der Sender 2 mit der Sendeoptik 12 angeordnet ist.

Die Empfänger 5, 6 bilden allgemein eine zum Sender 2 koaxiale Anordnung. Im vorliegenden Fall bildet, wie Figur 2b zeigt, ein sendernaher Empfänger 5 einen den Sender 2 umschließenden Innenring und ein senderferner Empfänger 6 einen den Innenring umschließenden Außenring, wobei der Außenring in drei flächengleiche Segmente unterteilt ist, die in Umfangsrichtung aneinander anschließen und sich jeweils über einen Winkelbereich von ca. 120° erstrecken. Die Segmente 6a, 6b, 6c sind durch schmale Lücken getrennt. Der den Innenring bildende sendernahe Empfänger 5, 6 weist einen Anschluss 50, 61, 62, 63 auf, über welchen dessen Empfangssignale der Auswerteeinheit 8 zugeführt werden. Auch jedes Segment 6a, 6b, 6c des senderfernen Empfängers 5, 6 weist einen separaten Anschluss 50, 61, 62, 63 auf, so dass auch die Empfangssignale aller Segmente 6a, 6b, 6c des senderfernen Empfängers 5, 6 der Auswerteeinheit 8 zugeführt werden.

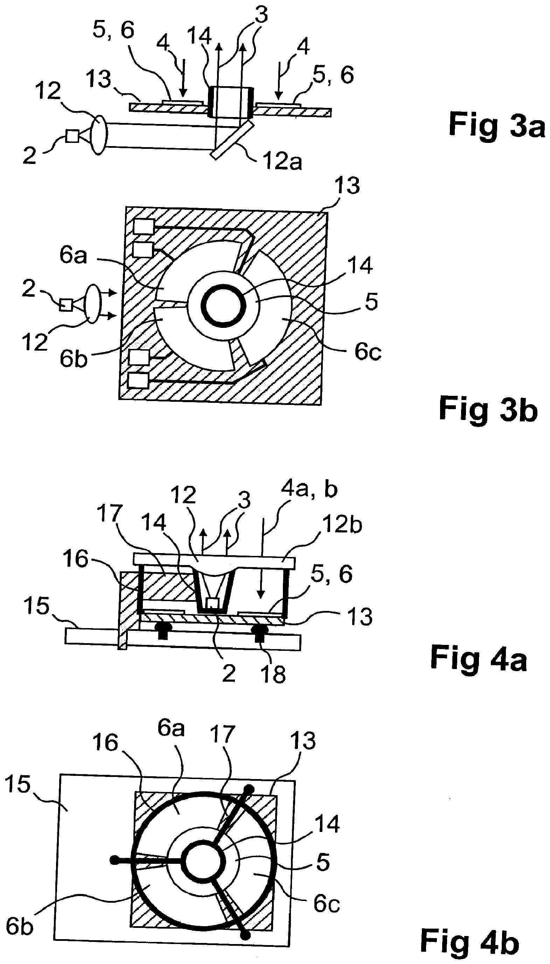

Die Figuren 3a, 3b zeigen eine nicht zur Erfindung gehörenden Abwandlung der Ausführungsform gemäß den Figuren 2a, 2b dahingehend, dass der Sender 2 nicht mehr im Bereich der zentralen Öffnung des Empfangselementeträgers 13 liegt. Anstelle dessen ist der Sender 2 unterhalb der Empfängeranordnung angeordnet und emittiert Sendelichtstrahlen 3, die parallel zur Ebene der Empfängeranordnung verlaufen. Mittels eines Umlenkspiegels 12a werden die Sendelichtstrahlen 3 durch die zentrale Öffnung der Empfängeranordnung, in welcher der Sendetubus 14 liegt, geführt.

Die Figuren 4a, 4b zeigen eine weitere Ausführungsform einer Sender- Empfängeranordnung des optischen Sensors 1 gemäß Figur 1. Die Empfängeranordnung mit dem Empfangselementeträger 13 sitzt auf einer Leiterplatte 15 als elektrischem Anschlussmittel auf, wobei eine derartige Leiterplatte 15 auch bei den Ausführungsformen der Figuren 2, 3 vorgesehen ist.

Der im Sendetubus 14 gelagerte Sender 2 sitzt auf der Oberseite der Empfängeranordnung auf, die im vorliegenden Fall keine zentrale Öffnung aufweist. Die Empfängeranordnung ist weiterhin in einem Empfangstubus 16 angeordnet, der die Empfängeranordnung gegen schräge Fremdlichteinstrahlung schützt. Weiterhin sind drei Haltestege 17 vorgesehen, die den Sendetubus 14 mit dem Empfängertubus 16 verbinden und dieses zudem an der Leiterplatte 15 halten. Die elektrische Kontaktierung der Anschlüsse 50, 61, 62, 63 der Empfängeranordnung mit der Leiterplatte 15 erfolgt durch elastische Kontakte 18. Die Sendeoptik 12 ist in einer Frontscheibe 12b integriert, durch welche die Empfangslichtstrahlen 4a, 4b geführt werden. Die Frontscheibe 12b sitzt auf dem Empfangstubus 16 auf.

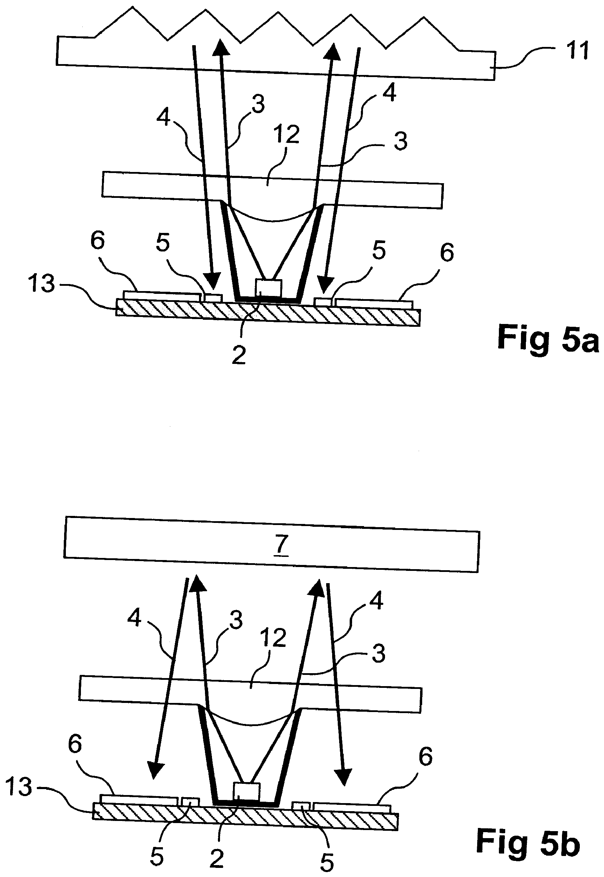

Die Auswertung aller Empfangssignale in der Auswerteeinheit 8 erfolgt nur mittels zweier Auswerteregeln. Die Auswertung ist in den Figuren 5a, 5b anhand der Ausführungsform der Figuren 4a, 4b erläutert, gilt jedoch in gleicher Weise für alle weiteren Ausführungsbeispiele.

Bei freiem Überwachungsbereich werden die vom Reflektor 11 zurückreflektierten Empfangslichtstrahlen 4a, 4b vorwiegend auf den Innenring geführt (Figur 5a). Ist ein Objekt 7 im Überwachungsbereich angeordnet, tritt Empfangslicht verstärkt auf den Außenring der Empfängeranordnung (Figur 5b). Dementsprechend wird in der Auswerteeinheit 8 als erste Auswerteregel formuliert:

Objekt erkannt, wenn U6 > U5

Dabei ist U5 der Empfangspegel des sendernahen Empfängers 5, das heißt des Innenrings. U6 ist das Gesamtsignal des senderfernen Empfängers 5, das heißt U6 ist definiert gemäß

$$U6 = U6a + U6b + U6c$$

U6a, U6b, U6c sind die Empfangssignale der einzelnen Segmente 6a, 6b, 6c des senderfernen Empfängers 5.

Bei Verwendung eines Reflektors 11 in Form eines Tripelreflektors liegt bei freiem Überwachungsbereich das Verhältnis U5:U6 typischerweise bei 3:1 bis 10:1. Dann kann die erste Auswerteregel wie folgt geändert werden.

Objekt erkannt, wenn U6 > j · U5

wobei j ein Faktor ist, der etwa bei j = 2 liegt.

Allein mit dieser Auswerteregel können sicher diffus reflektierende Objekte 7 und auch die meisten Objekte 7 mit glänzenden Objektoberflächen sicher erkannt werden.

Für den Fall, dass ein Objekt 7 mit einer schräg orientierten Objektoberfläche im Überwachungsbereich angeordnet ist, kann der Pegel U5 gleich groß oder größer als der Gesamtpegel U6 sein, so dass mit der o.g. ersten Auswerteregel dieses Objekt 7 nicht erkannt werden kann.

Jedoch liegen in diesem Fall stark asymmetrische Pegelverhältnisse der einzelnen Segmente 6a, 6b, 6c des senderfernen Empfänger 5, 6 vor, da durch die schräge Einstrahlung der Empfangslichtstrahlen 4b auf eines der Segmente 6a, 6b, 6c viel mehr Empfangslicht auftrifft als auf die restlichen.

Daher wird als Bedingung für eine Objektdetektion folgende zweite Auswerteregel formuliert, die zur Anwendung kommt, wenn bei Auswertung der ersten Auswerteregel ein freier Überwachungsbereich signalisiert wird:

Objekt erkennt, wenn:

$$U_{max} > k \cdot U_{min}$$

wobei

$U_{max}$: größter Empfangspegel der Empfangselemente 6a, 6b und 6c

$U_{min}$: kleinster Empfangspegel der Empfangselemente 6a, 6b und 6c

k: Faktor im Bereich 1,5 bis 3, vorzugsweise 2

Mit dieser zweiten Auswerteregel können hochglänzende Objekte 7 im Überwachungsbereich sicher erkannt werden.

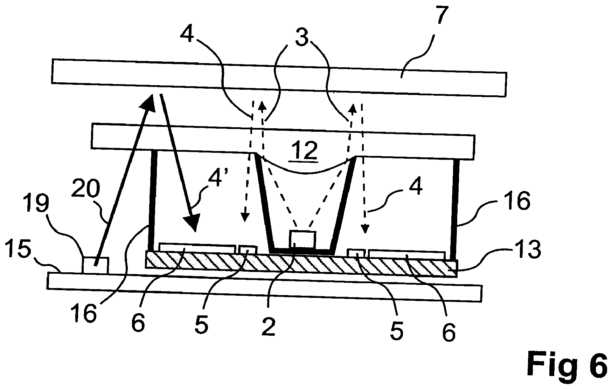

Figur 6 zeigt eine Erweiterung der Ausführungsform der Figuren 4a, 4b dahingehend, dass direkt neben dem Empfangstubus 16 ein Zusatzsender 19 in Form einer Sendediode vorgesehen ist. Mit den vom Zusatzsender 19 emittierten Lichtstrahlen 20 können auch Objekte 7 im Nahbereich, insbesondere Objekte 7 mit glänzenden Objektoberflächen, sicher erkannt werden.

Bezugszeichenliste

| | |
|---|---|
| (1) | Optischer Sensor |
| (1a) | Sensorgehäuse |
| (2) | Sender |
| (3) | Sendelichtstrahlen |
| (4a) | Empfangslichtstrahlen |
| (4b) | Empfangslichtstrahlen |
| (5) | Empfänger |
| (6) | Empfänger |
| (6a) | Segment |
| (6b) | Segment |
| (6c) | Segment |
| (7) | Objekt |
| (8) | Auswerte- und Steuereinheit |
| (9) | Schaltausgang |
| (10) | serielle Schnittstelle |
| (11) | Reflektor |
| (12) | Sendeoptik |
| (12a) | Umlenkspiegel |
| (13) | Empfangselementeträger |
| (14) | Sendetubus |
| (15) | Leiterplatte |
| (16) | Empfangstubus |
| (17) | Haltestege |
| (18) | Kontakt |
| (19) | Zusatzsender |
| (20) | Lichtstrahlen |
| (50) | Anschluss |
| (61) | Anschluss |
| (62) | Anschluss |
| (63) | Anschluss |

**Patentansprüche**

1. Optischer Sensor (1) zur Erfassung von Objekten (7) in einem Überwachungsbereich, mit wenigstens einem Sendelichtstrahlen (3) emittierenden Sender (2), wenigstens einem sendernahen, Empfangslichtstrahlen (4a, 4b) empfangenden Empfänger (5) und wenigstens einem senderfernen, Empfangslichtstrahlen (4a, 4b) empfangenden Empfänger (6), mit einem den Überwachungsbereich begrenzenden Reflektor (11), auf welchen die Sendelichtstrahlen (3) bei freiem Überwachungsbereich geführt sind, und mit einer Auswerteeinheit (8), in welcher in Abhängigkeit von Empfangssignalen an den Ausgängen der Empfänger (5, 6) ein binäres Schaltsignal generiert wird, dessen Schaltzustände angeben, ob sich ein Objekt (7) im Überwachungsbereich befindet oder nicht, wobei die Empfänger (5, 6) eine zum Sender (2) koaxiale Anordnung bilden, wobei der senderferne Empfänger (6) in mehrere Segmente (6a, 6b, 6c) unterteilt ist, welche jeweils separate Empfangssignale generieren, **dadurch gekennzeichnet, dass** die Empfänger (5, 6) eine Empfängeranordnung bilden, die auf einem Empfangselementeträger (13) angeordnet ist, dass der Sender (2) in einem Sendetubus (14) angeordnet ist, wobei der Sendetubus (14) in eine zentrale Öffnung des Empfangselementeträgers (13) und der Empfängeranordnung eingesetzt ist oder auf der Oberseite der Empfängeranordnung aufsitzt, wobei eine winkelabhängige Objektdetektion dadurch erfolgt, dass die Verhältnisse der Empfangssignale der Segmente des senderfernen Empfängers ausgewertet werden, und dass durch Vergleich der Empfangssignale der Segmente (6a, 6b, 6c) des senderfernen Empfängers (6) eine Unterscheidung eines Objekts (7) mit einer glänzenden Oberfläche vom Reflektor (11) erfolgt.

**2.** Optischer Sensor nach Anspruch 1, **dadurch gekennzeichnet, dass** der oder jeder sendernahe Empfänger (5) einen den Sender (2) umschließenden Innenring bildet.

**3.** Optischer Sensor nach Anspruch 2, **dadurch gekennzeichnet, dass** der oder jeder Innenring in mehrere Segmente unterteilt ist, die sich jeweils über einen bestimmten Winkelbereich des Innenrings erstrecken.

**4.** Optischer Sensor nach einem der Ansprüche 2 oder 3, **dadurch gekennzeichnet, dass** der oder jeder senderferne Empfänger (6) einen den Innenring umschließenden Außenring bildet.

**5.** Optischer Sensor nach Anspruch 4, **dadurch gekennzeichnet, dass** der oder jeder Außenring in Umfangsrichtung in mehrere Segmente (6a, 6b, 6c) unterteilt ist, die sich jeweils über einen bestimmten Winkelbereich des Außenrings erstrecken.

**6.** Optischer Sensor nach Anspruch 4, **dadurch gekennzeichnet, dass** alle Segmente (6a, 6b, 6c) des Außenrings oder des Innenrings gleich groß sind.

**7.** Optischer Sensor nach einem der Ansprüche 1 bis 6, **dadurch gekennzeichnet, dass** durch Vergleich der Empfangssignale des sendernahen und des senderfernen Empfängers (5, 6) eine Objektdetektion erfolgt.

**8.** Optischer Sensor nach einem der Ansprüche 1 bis 7, **dadurch gekennzeichnet, dass** dieser in einem Sensorgehäuse (1a) integriert ist, wobei das Sensorgehäuse (1a) mit einem Empfangstubus (16) und dem Sendetubus (14) eine Baueinheit bildet.

**9.** Optischer Sensor nach einem der Ansprüche 1 bis 8, **dadurch gekennzeichnet, dass** der Empfangselementeträger (13) von einer Glasplatte, einer Leiterplatte oder einer Folie gebildet ist.

**10.** Optischer Sensor nach einem der Ansprüche 1 bis 9, **dadurch gekennzeichnet, dass** die Empfänger (5, 6) aus organischen, fotoempfindlichen Schichten gebildet sind, und/oder dass der oder die Sender von organischen Leuchtdioden gebildet sind und/oder dass die Auswerteeinheit in Form einer auf einem Träger aufgedruckten Auswerteelektronik ausgebildet ist.

**11.** Optischer Sensor nach einem der Ansprüche 1 bis 10, **dadurch gekennzeichnet, dass** keine Empfangsoptik und nur eine dem Sender (2) zugeordnete Sendeoptik (12) vorgesehen ist.

**12.** Optischer Sensor nach einem der Ansprüche 1 bis 11, **dadurch gekennzeichnet, dass** eine Sendeoptik (12) in einer Frontscheibe (12b) integriert ist.

**13.** Optischer Sensor nach den Ansprüchen 8 und 12, **dadurch gekennzeichnet, dass** die Frontscheibe (12b) mit der Sendeoptik (12), der Empfangselementeträger (13) sowie eine Leiterplatte (15) durch den Empfangstubus (16) in Sollpositionen positioniert sind.

**14.** Optischer Sensor nach einem der Ansprüche 1 bis 13, **dadurch gekennzeichnet, dass** ein Zusatzsender (19) zur Objektdetektion im Nahbereich vorgesehen ist.

**15.** Optischer Sensor nach einem der Ansprüche 1 bis 14, **dadurch gekennzeichnet, dass** dieser einen Lichtvorhang mit einer Mehrfachanordnung von Sendern bildet.

**16.** Optischer Sensor nach einem der Ansprüche 1 bis 15, **dadurch gekennzeichnet, dass** dieser als Sicherheitssensor zur Erkennung von Personen in einem Gefahrenbereich ausgebildet ist.

## Claims

**1.** An optical sensor (1) for detecting objects (7) in a surveillance area, with at least one transmitter (2) emitting transmitted light beams (3), at least one receiver (5) receiving reception light beams (4a, 4b) near the transmitter and at least one receiver (6) receiving reception beams (4a, 4b) remote from the transmitter and having a reflector (11) delimiting the surveillance area, on which the transmitted light beams (3) are guided when the surveillance area is empty, and with an evaluation unit (8) in which a binary switching signal is generated as a function of reception signals at the outputs of the receivers (5, 6), whose switching states indicate whether an object (7) is in the surveillance area or not, wherein the receivers (5, 6) form an arrangement coaxial to the transmitter (2), wherein the receiver (6) remote from the transmitter (6) is subdivided into a plurality of segments (6a, 6b, 6c) which respectively generate separate reception signals,
**characterised in that** the receivers (5, 6) form a receiver arrangement which is provided on a reception element carrier (13), **in that** the transmitter (2) is arranged in a transmitting tube (14), wherein the transmitting tube (14) is inserted into a central opening of the reception element carrier (13) and the receiver arrangement is inserted or seated on top of the receiver arrangement,
And in the case of angle-dependent object detection, the ratios of the received signals of the segments of the transmitter-remote receiver are evaluated, and by comparing the reception signals of the segments (6a, 6b, 6c) of the transmitter-remote receiver (6), an object (7) can be detected with a shiny surface of the reflector (11).

2. An optical sensor according to claim 1, **characterised in that** the or each receiver (5) close to the transmitter forms an inner ring enclosing the transmitter (2).

3. An optical sensor according to claim 2, **characterised in that** the or each inner ring is divided into a plurality of segments, each extending over a certain angular range of the inner ring.

4. An optical sensor according to any one of claims 2 or 3, **characterised in that** the or each transmitter-remote receiver (6) forms an inner ring surrounding the outer ring.

5. An optical sensor according to claim 4, **characterised in that** the or each outer ring is divided into a plurality of segments (6a, 6b, 6c) around the periphery, each extending over a certain angular range of the outer ring.

6. An optical sensor according to claim 4, **characterised in that** all segments (6a, 6b, 6c) of the outer ring or the inner ring have the same size.

7. An optical sensor according to one of claims 1 to 6, **characterised in that** an object is detected by comparing the reception signals of the transmitter-near and transmitter-remote receivers (5, 6).

8. An optical sensor according to one of claims 1 to 7, **characterised in that** it is integrated in a sensor housing (1a), wherein the sensor housing (1a) forms a structural unit with a receiving tube (16) and the transmitting tube (14).

9. An optical sensor according to one of claims 1 to 8, **characterised in that** the receiving element carrier (13) is formed by a glass plate, a printed circuit board or a film.

10. An optical sensor according to one of claims 1 to 9, **characterised in that** the receivers (5, 6) consist of organic, photosensitive layers, and/or that the transmitter(s) consist of organic light-emitting diodes and/or that the evaluation unit is in the form of an evaluation circuitry printed on a carrier.

11. An optical sensor according to one of claims 1 to 10, **characterised in that** no reception optics and only one of the transmitting optics (12) associated with the transmitter (2) are provided.

12. An optical sensor according to one of claims 1 to 11, **characterised in that** a transmission optics (12) is integrated in a windscreen (12b).

13. An optical sensor according to claims 8 and 12, **characterised in that** the windscreen (12b) with the transmitting optics (12), the reception element carrier (13) and a printed circuit board (15) are placed in target positions by the receiving tube (16).

14. An optical sensor according to one of claims 1 to 13, **characterised in that** an additional transmitter (19) is provided in the vicinity for the detection of objects.

15. An optical sensor according to one of claims 1 to 14, **characterised in that** it forms a light curtain with a multiple arrangement of transmitters.

16. An optical sensor according to one of claims 1 to 15, **characterised in that** it is designed as a security sensor for detecting persons in a danger area.

**Revendications**

1. Capteur optique (1) pour détecter des objets (7) dans une zone de surveillance, comportant au moins un émetteur (2) émettant des rayons lumineux d'émission (3), au moins un récepteur proche de l'émetteur (5), recevant des rayons lumineux de réception (4a, 4b), et au moins un récepteur éloigné de l'émetteur (6), recevant des rayons lumineux de réception (4a, 4b), comportant un réflecteur (11) limitant la zone de surveillance, sur lequel les rayons lumineux d'émission (3) sont guidés lorsque la zone de surveillance est libre, et comportant une unité d'évaluation (8) dans laquelle un signal de commutation binaire est généré aux sorties des récepteurs (5, 6) en fonction des signaux de réception, dont les états de commutation indiquent si un objet (7) se trouve ou non dans la zone de surveillance, les récepteurs (5, 6) formant un agencement coaxial à l'émetteur (2), le récepteur éloigné de l'émetteur (6) étant divisé en plusieurs segments (6a, 6b, 6c), dont chacun génère des signaux de réception séparés,
**caractérisé en ce que** les récepteurs (5, 6) forment un agencement de réception qui est disposé sur un support d'éléments de réception (13), que l'émetteur (2) est disposé dans un tube d'émission (14), le tube d'émission (14) étant inséré dans une ouverture centrale du support d'éléments de réception (13) et de l'agencement de réception ou étant placé sur le côté supérieur de l'agencement de réception, une détection d'objets dépendante de l'angle étant effectuée en évaluant les rapports des signaux de réception des segments du récepteur éloigné de l'émetteur, et qu'un objet (7) ayant une surface brillante est distingué du réflecteur (11) en comparant les signaux de réception des segments (6a, 6b, 6c) du récepteur éloigné de l'émetteur (6).

2. Capteur optique selon la revendication 1, **caractérisé en ce que** le ou chaque récepteur proche de l'émetteur (5) forme un anneau intérieur entourant l'émetteur (2).

3. Capteur optique selon la revendication 2, **caractérisé en ce que** le ou chaque anneau intérieur est divisé en plusieurs segments dont chacun s'étend sur une plage angulaire définie de l'anneau intérieur.

4. Capteur optique selon l'une des revendications 2 ou 3, **caractérisé en ce que** le ou chaque récepteur éloigné de l'émetteur (6) forme un anneau extérieur entourant l'anneau intérieur.

5. Capteur optique selon la revendication 4, **caractérisé en ce que** le ou chaque anneau extérieur est divisé en plusieurs segments (6a, 6b, 6c) dans la direction circonférentielle, dont chacun s'étend sur une plage angulaire définie de l'anneau extérieur.

6. Capteur optique selon la revendication 4, **caractérisé en ce que** tous les segments (6a, 6b, 6c) de l'anneau extérieur ou de l'anneau intérieur sont de taille égale.

7. Capteur optique selon l'une des revendications 1 à 6, **caractérisé en ce que** la détection d'objets est effectuée en comparant les signaux de réception des récepteurs proche et éloigné de l'émetteur (5, 6).

8. Capteur optique selon l'une des revendications 1 à 7, **caractérisé en ce qu'**il est intégré dans un boîtier de capteur (1a), le boîtier de capteur (1a) formant une unité structurelle avec un tube de réception (16) et le tube d'émission (14).

9. Capteur optique selon l'une des revendications 1 à 8, **caractérisé en ce que** le support d'éléments de réception (13) est formé par une plaque de verre, une carte de circuit imprimé ou une feuille.

10. Capteur optique selon l'une des revendications 1 à 9, **caractérisé en ce que** les récepteurs (5, 6) sont formés de couches photosensibles organiques et/ou que le ou les émetteurs sont formés de diodes électroluminescentes organiques et/ou que l'unité d'évaluation est réalisée sous la forme d'une électronique d'évaluation imprimée sur un support.

11. Capteur optique selon l'une des revendications 1 à 10, **caractérisé en ce qu'**aucune optique de réception n'est prévue et qu'une seule optique d'émission (12) associée à l'émetteur (2) est prévue.

12. Capteur optique selon l'une des revendications 1 à 11, **caractérisé en ce qu'**une optique d'émission (12) est intégrée dans une vitre frontale (12b).

13. Capteur optique selon les revendications 8 et 12, **caractérisé en ce que** la vitre frontale (12b) avec l'optique d'émission (12), le support d'éléments de réception (13) et une carte de circuit imprimé (15) sont positionnés dans des positions de consigne par le tube de réception (16).

14. Capteur optique selon l'une des revendications 1 à 13, **caractérisé en ce qu'**un émetteur supplémentaire (19) est prévu pour la détection d'objets dans la zone proche.

15. Capteur optique selon l'une des revendications 1 à 14, **caractérisé en ce qu'**il forme une barrière immatérielle avec un agencement multiple d'émetteurs.

16. Capteur optique selon l'une des revendications 1 à 15, **caractérisé en ce qu'**il est réalisé sous la forme d'un capteur de sécurité destiné à détecter des personnes dans une zone dangereuse.

Fig 1

Fig 2a

Fig 2b

**Fig 3a**

**Fig 3b**

**Fig 4a**

**Fig 4b**

**Fig 5a**

**Fig 5b**

**Fig 6**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102005033349 A1
- DE 19907546 A1

- DE 10229408 B4